# EUROPEAN PATENT APPLICATION

(11) **EP 3 229 043 A1**
(43) Date of publication of application: **11.10.2017**
(21) Application number: 17305354.7
(22) Date of filing: 28.03.2017
(51) Int. Cl.: G01V 1/38

(54) **METHOD AND SYSTEM FOR MARINE SEISMIC ACQUISITION**

(30) Priority: 05.04.2016 US 201662318225 P
(71) Applicant: CGG Services SAS, 91300 Massy (FR)
(72) Inventor: JUPINET, Benoît, 91300 MASSY (FR); SILIQI, Risto, 91300 MASSY (FR)
(74) Representative: Petit, Maxime

(57) **Abstract**

A seismic acquisition system (400) for acquiring seismic data includes a streamer spread (402) including first and second streamers (420), each of the first and second streamers (420) having at least one seismic receiver (422) and at least one position control device (424), and a seismic source (408) located within an area underlined by the streamer spread (402) and configured to generate seismic waves. The streamer spread (402) and the source (408) are towed independent of each other, a streamer separation DS between the first and second streamers varies along a length of the spread to comply with a given survey characteristic, and the streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value.

## Description

### BACKGROUND

### TECHNICAL FIELD

Embodiments of the subject matter disclosed herein generally relate to methods and systems and, more particularly, to mechanisms and techniques for configuring streamers to achieve desired seismic data characteristics.

### DISCUSSION OF THE BACKGROUND

Reflection seismology is a method of geophysical exploration to determine the properties of a portion of the earth's subsurface, information that is especially helpful in the oil and gas industry. Marine reflection seismology is based on the use of a controlled source that sends energy waves into the earth. By measuring the time it takes for the reflections to come back to plural receivers, it is possible to estimate the depth and/or composition of the features causing such reflections. These features may be associated with subterranean hydrocarbon deposits.

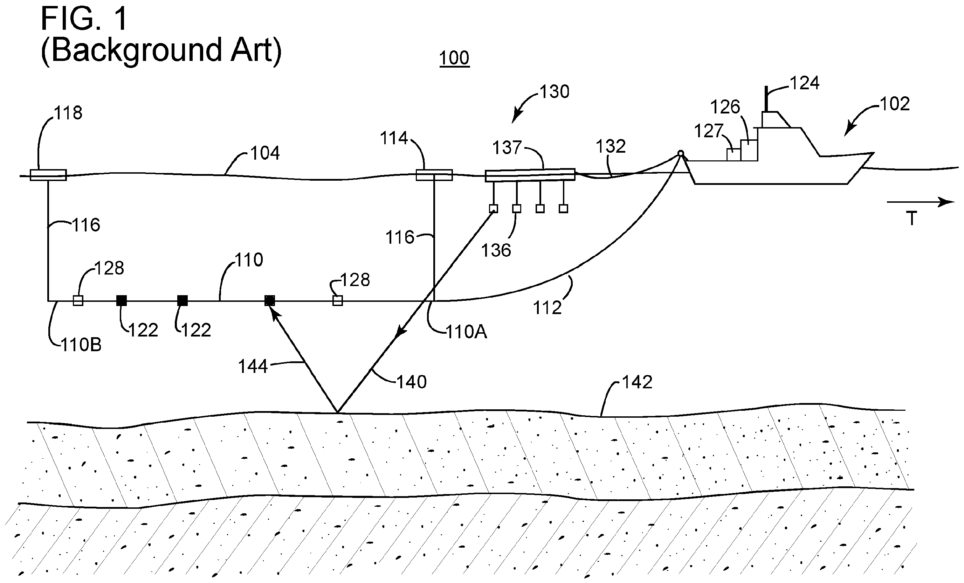

For marine applications, a seismic survey system 100, as illustrated in Figure 1, includes a vessel 102 that tows plural streamers 110 (only one is visible in the figure) and a seismic source 130. Streamer 110 is attached through a lead-in cable (or other cables) 112 to vessel 102, while source array 130 is attached through an umbilical 132 to the vessel. A head float 114, which floats at the water surface 104, is connected through a cable 116 to a head end 110A of streamer 110, while a tail buoy 118 is connected, through a similar cable 116, to a tail end 110B of streamer 110. Head float 114 and tail buoy 118 are used, among other things, to maintain the streamer's depth. Seismic receivers 122 are distributed along the streamer and are configured to record seismic data. Seismic receivers 122 may include a hydrophone, geophone, accelerometer, gradient pressure receiver or a combination thereof. Positioning devices (birds) 128 are attached along the streamer and controlled by a controller 126 for adjusting a position of the streamer according to a survey plan.

Source array 130 has plural source elements 136, which typically are air guns. The source elements are attached to a float 137 to travel at desired depths below the water surface 104. During operation, vessel 102 follows a predetermined path T while source elements 136 emit seismic waves 140. These waves bounce off the ocean bottom 142 and other layer interfaces below the ocean bottom 142 and propagate as reflected/refracted waves 144 that are recorded by receivers 122. The positions of both the source element 136 and recording receiver 122 are estimated based on GPS systems 124 and recorded together with the seismic data in a storage device 127 onboard the vessel. Controller 126 has access to the seismic data and may be used to achieve quality control or even full processing of this data. Controller 126 may be also connected to the vessel's navigation system and other elements of the seismic survey system, e.g., birds 128.

The recorded seismic data is later processed to achieve one or more objectives. For example, in a 3D seismic survey, it may be desirable to achieve ghost diversity so that the notches formed by the ghosts in the frequency spectrum can be filled in. To achieve good deghosting, as disclosed in Patent No. 8,593,904, authored by Soubaras and assigned to the assignee of this application (the entire content of which is incorporated by reference), it is possible to shape the streamer to have a curved profile in a vertical plane. Depending on the interest in the low frequency content or the high frequency content, the depth of the streamer and the receiver composition may also be adapted to maximize the quality of the seismic data. In this respect, it is known that for a depth imaging of the Earth, the low-frequencies are desirable as they travel a long distance. On the contrary, the high-frequencies are quickly attenuated by the Earth, and thus, they are more appropriate for shallow imagining. However, the high-frequencies generate a finer definition of the surveyed subsurface. For example, the high-frequency data may include frequencies between 100 and 250 Hz and the low-frequency data may include frequencies lower than 35 Hz.

However, for another survey, the goal may be different, e.g., to comply with another survey characteristic. Such survey characteristic may require a configuration of the streamers different from having parallel streamers.

Thus, there is a need to have a spread that can be quickly adapted to comply with a specific survey characteristic.

### SUMMARY

According to an embodiment, there is a seismic acquisition system for acquiring seismic data. The system includes a streamer spread including first and second streamers, each of the first and second streamers having at least one seismic receiver and at least one position control device and a seismic source located within an area underlined by the streamer spread and configured to generate seismic waves. The streamer spread and the source are towed independent of each other, a streamer separation DS between the first and second streamers varies along a length of the spread to comply with a given survey characteristic, and the streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value.

According to another embodiment, there is a method for acquiring seismic data that includes towing a streamer spread including first and second streamers, each of the first and second streamers having at least one seismic receiver and at least one position control device; towing a seismic source located within an area underlined by the streamer spread and configured to generate seismic waves; and controlling with the position location devices a streamer separation DS between the first and second streamers so that the streamer separation DS varies along a length of the spread to comply with a given survey characteristic. The streamer spread is towed by a first vessel and the source is towed by a second vessel. The streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value.

According to still another embodiment, there is a method for acquiring seismic data that includes calculating plural streamer separations DS between first and second streamers of a spread so that the streamer separation DS varies along a length of the spread to comply with a given survey characteristic, calculating forces to be applied by birds, which are located on the first and second streamers, to maintain the streamer separations DS along the length of the spread, and programming the birds to hold the forces during a seismic survey to maintain the streamer separations DS while the first and second streamers move through the water. There are a streamer separation DS(F) at a front-end of the spread, a streamer separation DS(O) at a middle of the spread, and a streamer separation DS(B) at a back-end of the spread, and the streamer separation at the middle of the spread is smaller than the streamer separations at the front-end and the back-end.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a seismic acquisition system;
Figure 2 is a schematic diagram of a split-spread configuration having parallel streamers;
Figure 3 illustrates a Fresnel zone;
Figure 4 illustrates a split-spread configuration with variable streamer separation;
Figure 5 illustrates another split-spread configuration with variable streamer separation;
Figure 6 is a flowchart of a method for acquiring seismic data with a split-spread configuration having variable streamer separation;
Figures 7A and 7B illustrate a split-spread configuration with variable streamer separation in which a position of a source dynamically changes along a length of the spread;
Figures 8A and 8B illustrate a split-spread configuration that changes from a constant streamer separation to a variable streamer separation;
Figure 9 is another split-spread configuration with variable streamer separation;
Figure 10 is a flowchart of a method for acquiring seismic data with a split-spread configuration with variable streamer separation;

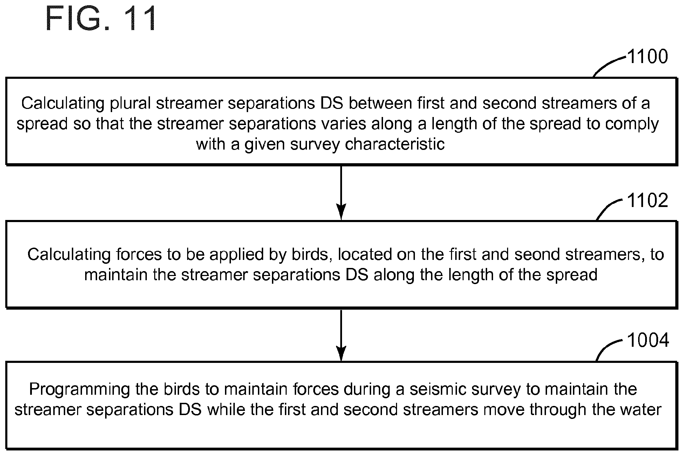

Figure 11 is a flowchart of a method for controlling plural birds of a split-spread configuration with variable streamer separation; and
Figure 12 is a schematic diagram of a control device.

### DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a streamer towed in water by a vessel. However, the embodiments to be discussed next are not limited to a marine streamer; they may be applied to other seismic elements that need to be flexible for accommodating various configurations.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

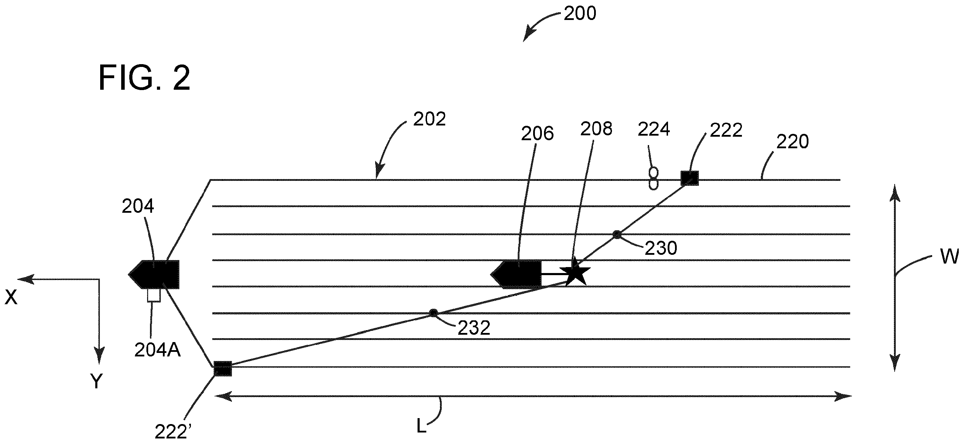

According to a split-spread configuration illustrated in Figure 2, there is a seismic acquisition system 200 that includes a marine split-spread 202 towed by a vessel 204. A split-spread configuration is considered a configuration for which a source is located, along a traveling direction X, between the front-end and the back-end of the spread. Note that for a traditional acquisition system as illustrated in Figure 1, the sources are located either in front of the spread, or on a side of the spread. A source vessel 206 tows a source 208 and this source is located above an area underlined by the split-spread 202. Figure 2 shows the split-spread 202 having a length L and a width W and including plural streamers 220, each streamer including plural seismic receivers 222 for streamer 220. For simplicity, Figure 2 shows only one receiver 222. Streamers 220 may also include position control devices 224 (also known as birds). These devices are located along the streamers, for example, at least every 100 to 200 m, and they are coordinated by a global control unit 204A, located on the vessel 204, for maintaining the positions of the streamers parallel to each other and/or parallel to the traveling path X, which is also the inline direction.

Source 208 is located at the middle of the split-spread 202, i.e., at L/2 from the head of the spread and W/2 from an outer streamer. For this embodiment, the near offset data 230 (the offset is defined as the distance between a recording receiver 222 and the source 208) are recorded close to the middle of the spread, where the seismic source is located, and the long offset data 232 are located at the back-end of the spread as well as at the front-end. Only one offset data point 232 is shown for a receiver 222'.

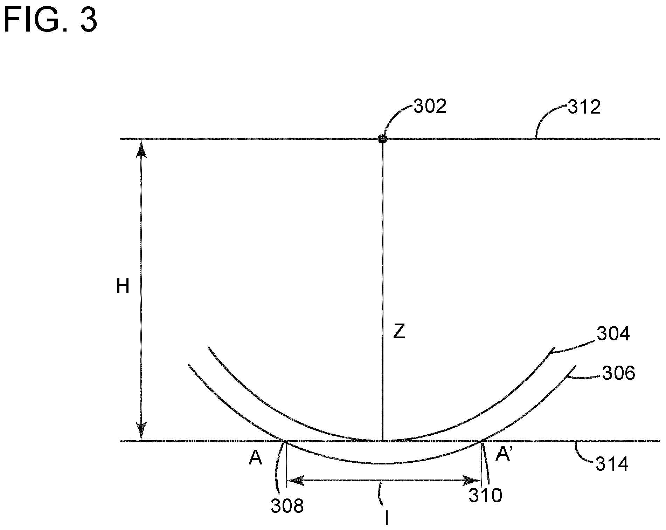

During certain seismic surveys, the spread needs to have a certain configuration in order that the acquired seismic data complies with a given survey characteristic. In the following, the survey characteristic is selected to be the Fresnel zone size. In other words, the size of the Fresnel zone may be considered when distributing the seismic sensors over the area to be surveyed. Other survey characteristics may be used. A Fresnel zone is defined, as illustrated in Figure 3, by locations 308 and 310. These locations are determined by considering where a second wave-front 306 intersects a reflector 314. Wave-front 306 is obtained by considering a source 302, located at or near the water surface 312, emitting a wave that propagates toward the reflector. A first wave-front 304 reaches (i.e., the reflector is tangent to the first wave-front) the reflector 314 and the second wave-front 306 is assumed to have propagated one fourth of the wavelength of the wave, past the reflector and away from the first wave-front 304. Reflector 314 is located at a depth H relative to the water surface 312. The distance I between points A and A' determine the size of the Fresnel zone. Based on this definition of the Fresnel zone, the reflected signal (recorded by a seismic sensor) is a result of the property of the reflector within the Fresnel zone bounded at reflector locations "A" 308 and "A"' 310. It should be noted that a reflection thought of as coming back to the surface from a "point" is actually being reflected from an "area" having the dimension of the Fresnel zone.

This means that the illumination at a given depth H realized by the emission of acoustic signals and the recordings at a receiver are not originating from a single point 302, but from a surface having the size I, which depends on the bandwidth of the signal and on the source-receiver distance, commonly called offset. This surface is known as the Fresnel zone. Considering the physics of the Fresnel zone, some of the traditional seismic spreads have less receiver deployment at the large offset because for these offsets, having more receiver will not bring any extra illumination of the subsurface for this depth. In other words, the size of the Fresnel zone for a configuration of parallel streamers, as illustrated in Figure 2, varies with the offset, being smaller at the front-end of the spread and being larger at the back-end of the spread.

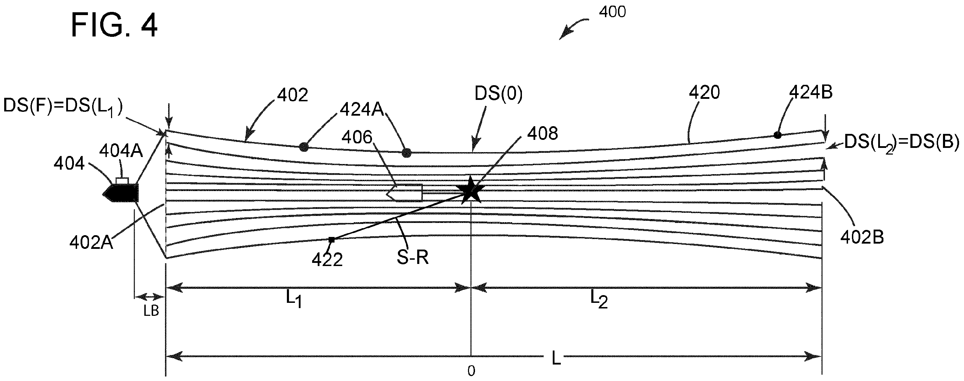

In order to respect the size of the Fresnel zone along the streamers versus the offsets, according to an embodiment illustrated in Figure 4, the spread 402 (which includes at least first and second streamers 420, each having at least one seismic receiver 422 and at least a position location device or bird 424) has a larger streamer separation at the front-end 402A as well as at the back-end 402B relative to the middle part. If at the front-end (far-offsets), the streamer separation DS(L₁) or DS(F) is part of the front-end design of the spread and it is not easy to be changed, at the middle-of the spread (near-offset), the position control devices 424A can control the separation of the streamers 420 to make the streamer separation DS(O) smaller than DS(F). On the other hand, the position control devices 424B at the back-end 402B of the spread 402 can bring the streamer separation DS(L₂) or DS(B) back to the same type of configuration as at the front-end 402A. Thus, in this embodiment, the streamer separation DS varies from a first value DS(L₁) at one end, to a smaller second value DS(O) at the middle of the spread, and to a third larger value DS(L₂) at the back of the spread. In other words, the streamer separation DS varies such that DS(L₁) is larger than DS(O), DS(L₂) is larger than DS(O), and DS(L₁) is the same, larger or smaller than DS(L₂).

For example, in one embodiment, source 408, which is towed by a corresponding vessel 406, is not located at the middle of the spread's length L, but rather at a positon O, somewhere along the streamer's length L, where L = L₁ + L₂. Position O is within the area determined by the spread in the X-Y plane, i.e., a plane parallel to the air-water interface. Note that a depth of the streamers relative to the water surface can have any value. This means that source 408 is effectively on top of spread 402. If this position is considered to be the origin, then the streamer separation DS(O) has the smallest value and the streamer separation DS(L₁) at the front-end may be different from the streamer separation DS(L₂) at the back-end. However, if the position O is exactly at half of the streamer's length L, then DS(L₁) = DS(L₂).

By properly instructing each position control device 424A and 424B to enforce a certain lateral separation between the streamers (also called cross-line separation, which is measured along a cross-line direction Y that is perpendicular on the inline direction X), any desired streamer separation may be obtained. In this regard, DS(L₁) and/or DS(L₂) may be in the range of about 50 to 250 m while DS(O) may be in the range of about 10 to 150 m.

The embodiment illustrated in Figure 4 may be summarized as illustrating a seismic acquisition system 400 that includes a streamer spread 402 and a source 408. The streamer spread includes at least first and second streamers 420, each of the first and second streamers 420 having at least one seismic receiver 422 and at least one position control device 424. The seismic source 408 is located within an area underlined by the streamer spread 402 and configured to generate seismic waves. The streamer spread 402 is towed by a first vessel 404 and the source 408 is towed by a second vessel 406. A streamer separation DS between the first and second streamers varies along a length of the spread to comply with a given survey characteristic (e.g., Fresnel zone's size), and the streamer separation varies from a front-end value DS(F) at a front-end of the spread, to a middle of the spread value DS(O), to a back-end value DS(B) at a back-end of the spread. The middle of the spread value is smaller than the front-end value and smaller than the back-end value.

As the Fresnel zone's size S is changing with the source-receiver offset S-R, it is possible to model the Fresnel zone's size S to depend with the offset S-R, i.e., S can be described by a function g of S-R, S = g(S-R). In one application, function g is linear with S-R. In still another application, function g is non-linear with S-R. In still another application, function g can be parametrized as depending on S-R. In still another embodiment, function g may be defined to be more sensitive, e.g., to depend not only with the source receiver offset S-R, but also with the depth Z of a given survey target. In this case, the size S of the Fresnel zone is a function g(S-R, z) of two variables, the offset S-R and the depth z of the target. Function g, as discussed above, may take various forms. In still another embodiment, the size S of the Fresnel zone is a function g(S-R, z, f) of three variables, the offset S-R, the depth z of the target and the frequency f emitted by the source.

According to one embodiment, the Fresnel zone's size S may be calculated for a given seismic survey area, by taking into account one or more of the offsets between the source and the receivers, the depth of the target, and the frequency emitted by the source. Once these sizes are determined for various offsets, the various separation distances DS(Lᵢ) are calculated and the position control device 424A and 424B are instructed to achieve and maintain these separation distances.

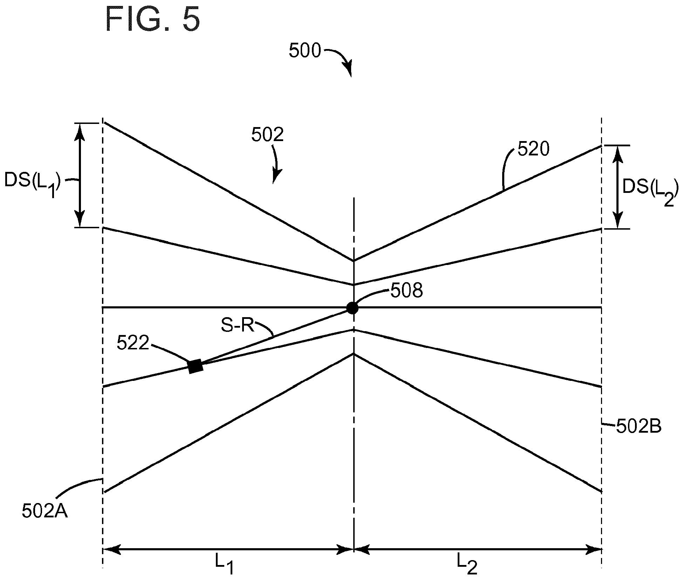

The embodiment illustrated in Figure 4 has the separation distance varying uniformly and continuously along the length of the spread, from DS(L₁) to DS(O) to DS(L₂). However, in another embodiment, it is possible that there is a discontinuity at DS(O), i.e., there is a jump in the first derivative of the separation distances at point O, as illustrated in Figure 5. In this case, the shape of the streamers is not curved, as illustrated in Figure 4, but rather a straight line as illustrated in Figure 5. Figure 5 shows most streamers as being described by two straight lines being connected to each other at point O. In this case, similar to the embodiment illustrated in Figure 4, the streamer separation DS(O) at point O is minimum and the streamer separations at the front-end DS(L₁) and back-end DS(L₂) are maximum. The streamer separations at the front-end and back-end may be the same or different. This means that point O, where the source is located, may be located at the middle of the spread's length or not.

Returning to the embodiment of Figure 4, the shape of the streamers in the horizontal plane (described by inline and cross-line directions X and Y) may be described as a set of curved line with two or more lines having different curvatures. In one embodiment, the curved line is a parametrized curve, i.e., a curved described by one or more parameters. In one variant, two central streamers are a straight line and the other streamers are curved in the horizontal plane, with the outer streamers being more curved than the inner streamers. In one embodiment, the shape of the streamers is an arc of a circle. In this embodiment, the outer streamers have a radius of curvature smaller than the radius of curvature for the inner streamers. In still another embodiment, the central streamer is a master streamer that is free to take any shape, as dictated by the ocean currents, and the remaining of the streamers are slave streamers that use their birds to mirror the master streamer with the various streamer separations DS calculated as discussed in this document.

The streamer separation at the front-end of the spread is part of dimensioning the entire spread, which depends on the total width W of the spread, which is given by N*DS(L₁), where N is the total number of streamers in the spread. The width W of the spread is limited by the capacity of the vessel. However, it is possible to tow a larger spread if the layback LB distance (see Figure 4) between the towing vessel and the front-end of the spread is increased. In the case of a split-spread, increasing the layback does not affect the seismic offsets, which is generally the case where the streamer vessel tow a source located in front of the spread. Thus, in order to realize the necessary streamer separation DS(L₁) and to also respect the towing capacity of the streamer vessel, the layback LB is calculated accordingly.

The streamer separation at the middle of the spread, where the near-offset data will be acquired, is smaller than the streamer separation at the front-end as already discussed. This variable streamer separation is achieved by using position control devices. In the case of lateral current (ocean currents), a command and control system (e.g., global controller 404A in Figure 4) of the position control devices is programmed to instruct each position control device to preserve the streamer separation rather to maintain the lateral position of the middle of the spread. In the case where it is necessary to preserve the lateral positioning of the middle of the spread, e.g., the position relative to the source vessel navigation over the spread, this objective may be achieved by steering the vessel accordingly, rather than steering the position control devices of the streamers. This approach attempts to reduce the noise that could be generated by an aggressive steering.

The streamer separation at the back-end of the spread is similar to that of the middle of the spread in the sense that the position control devices, in case that ocean currents are present, may be configured to maintain the lateral positioning of the streamers instead of maintaining the positions of the streamers relative to the vessel. The same precautions can be taken as above for minimizing the noise generated by the steering.

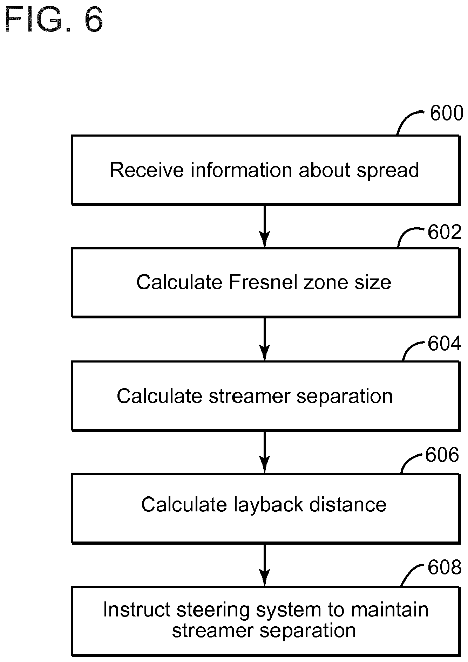

A method for calculating the separation distances between the streamers along the spread, while respecting the Fresnel zone considerations noted above, is now discussed with regard to Figure 6. In step 600, the method receives the parameters describing the spread (e.g., number of streamers, length of streamers, streamer separation at the front-end, position of source relative to the front and back-ends of the spread, depth of target to be surveyed, etc.). In step 602, the Fresnel zone size S is calculated for short, medium and long-offsets. In step 604, the streamer separation DS is calculated as a function of the target's depth, the position of the source relative to the front- and back-ends of the spread and the size S of the Fresnel zone. Depending on the required front-end streamer separation DS(F), the layback distance LB may be calculated in step 606 to accommodate this distance. Based on the various streamer separations DS calculated above, and the position of the position control devices along the streamers, each position control device receives corresponding commands for maintaining the calculated streamer separations DS. In step 608, the steering system, which includes the general controller and the position control devices, is actuated to maintain the desired shape of the spread, e.g., as shown in Figures 4 or 5.

In one embodiment, it is desired to achieve a dynamic resolution acquisition for a same seismic survey. In the context of dynamic resolution acquisition, when it is desired to acquire seismic data for different geological targets, see for example U.S. Patent Application Publication 2016/0313466, different acquisition configurations could be deployed at different parts of the survey. However, that process may be slow and expensive.

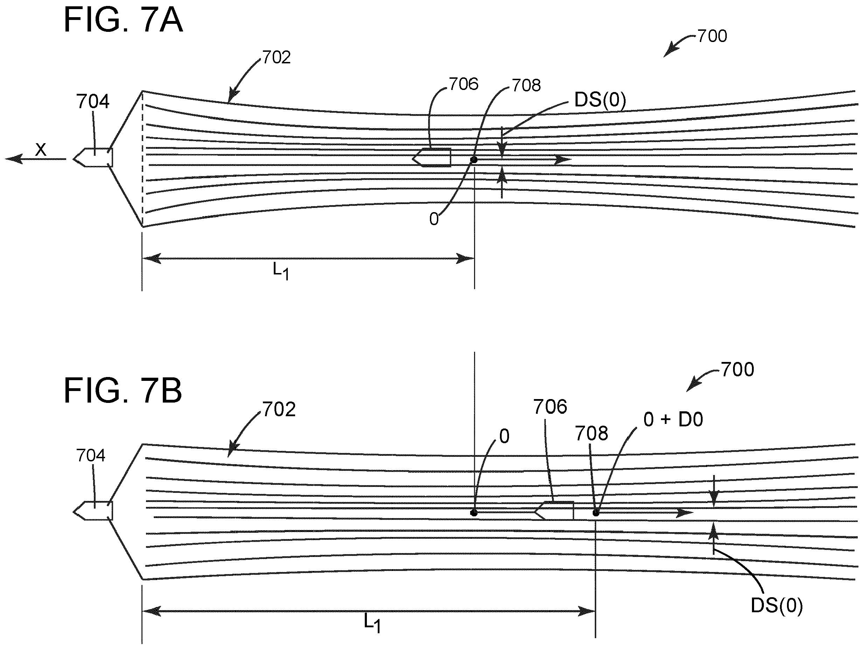

According to the embodiment illustrated in Figures 7A and 7B, it is possible to achieve the desired dynamic resolution acquisition for a same seismic survey by using a single spread and a source as now discussed. Figure 7A shows acquisition system 700 including spread 702 and source 708. Source 708 is located, for example, in the middle of the spread, i.e., L1 =L/2, where L is the total length of the spread. After the spread advances, along the traveling path X, for a given time or distance, in order to change the acquisition resolution, the position of the source 708 relative to the spread 702 may be dynamically changed. This is possible because the vessel 704 towing the spread is independent of the vessel 706 towing the source 708, which means that the position of the source 708 relative to the spread 702 can be changed independent of the spread. In this respect, Figure 7B shows source 708 being now at a distance L₁ larger than L/2 from the front-end of the spread. In one embodiment, distance L₁ can be smaller than L/2. The position of the vessel 708 can be changed during the seismic survey, as desired. The location of the source 708 can be moved anywhere within the spread 702.

With this arrangement, for different geological targets at different depths, the value of the largest offset can be modified accordingly. A larger offset could be achieved by repositioning the source vessel 706 closer to the front-end or to the back-end of the spread 702 according to HSE (health, safety and environment) constrains (e.g., depth of the spread below the source vessel) or geophysical considerations (the relation of the variable depth streamer profile regarding the source location).

Changing the position of the source vessel 706 relative to the spread 702, as illustrated in Figures 7A and 7B, modifies the location of the near offsets, which in turn require the streamer separation DS(O) to be changed to be aligned with the location of the source. In other words, if the smallest streamer separation DS(O) is shown in Figure 7A as being aligned with the location O of the source 708 along the inline direction X, in Figure 7B the location of the smallest streamer separation should be moved along the inline direction X to coincide with the new location of the source 708, i.e., at position O + ΔO. To achieve this change in the location of the smallest streamer separation, the steering system will instruct the position location devices to apply different forces to their corresponding streamers. In the same way, if necessary, the steering system will adjust the forces applied to the streamers to achieve a larger streamer separation at the back-end.

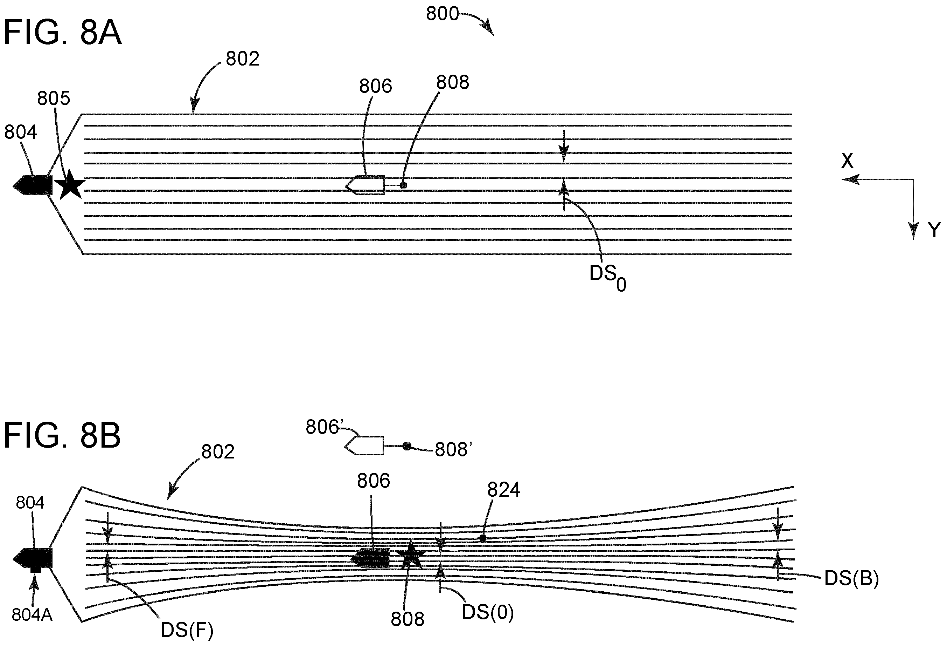

In another embodiment, it is possible to use the steering system to change the spread from standard narrow azimuth acquisition (NAZ) to split-spread NAZ acquisition. NAZ acquisition refers to an acquisition system in which a vessel 804 tows a plurality of streamers 802 and a source 805 (see Figure 8A). All the streamers are substantially parallel to each other and a streamer separation DSₒ for the entire spread is substantially constant. For this case, the line passing through the source and a receiver on a streamer makes a small angle with the inline direction X, and thus, a narrow azimuth. However, if the source 808 is placed within the footprint of the spread 802, as also shown in Figure 8A, then a split-spread system is achieved as already discussed with regard to Figure 2 as the azimuth is larger.

In the context of NAZ acquisition (the configuration of Figure 8A without source 808), the need for extra resolution in a specific survey area could require a split-spread configuration, which is realized with the use of an extra source vessel 806. The double flaring of the spread illustrated in Figure 8B could be used as a capability to switch from a regular NAZ spread (see Figure 8A) to a dense split-spread acquisition (see Figure 8B) without modifying the front-end of the spread. The position control devices 824 (only one shown for simplicity) at the middle of the spread (e.g., below the source vessel) are instructed to narrow down the streamer separation DS to the requested minimum streamer separation value DS(O) and the front-end and back-end of the spread do not need to be adjusted (especially the front-end) due to the Fresnel zone considerations. Thus, the front streamer separation DS(F) and the back streamer separation DS(B) may be identical to the streamer separation DSₒ of the NAZ acquisition.

According to an embodiment, the position control devices 824 can be instructed to make the requested minimum separation distance DS(O) move during the seismic survey along the inline direction X, as desired. If this happens, the global controller 804A located on the streamer vessel 804 can also instruct source vessel 806 to move source 808 in synchronism with DS(O), so that their positions along the inline direction X coincide.

In still another embodiment, a second source vessel 806' may be brought in, to tow a corresponding source 808', substantially parallel to the traveling path of source 808, but with an offset separation along the cross-line direction Y. For this embodiment, wide azimuth (WAZ) data may be acquired.

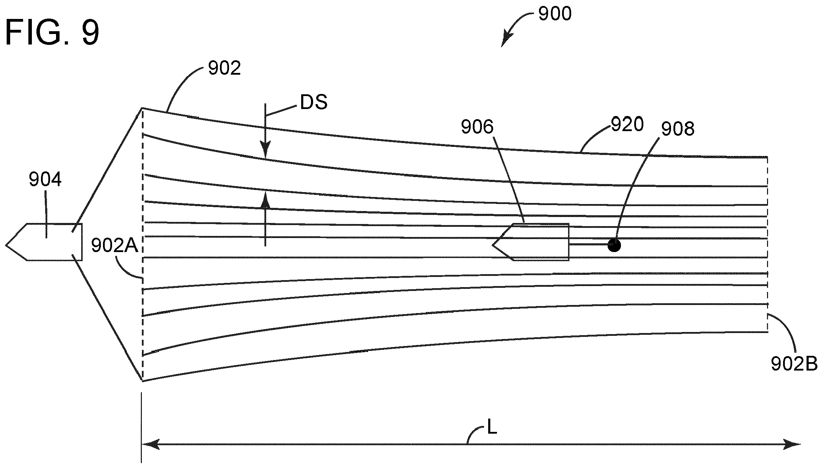

In yet another embodiment illustrated in Figure 9, the acquisition system 900 also includes a spread 902 towed by a vessel 904 and a source 908 towed by a vessel 906. Source 908 is located at a position above an area defined by the spread 902. A streamer separation DS between two adjacent streamers varies along a length L of the spread, for example, continuously. The streamer separation DS varies from a maximum value at a front-end 902A of the spread 902 to a minimum value at a back-end 902B of the spread. In one application, the streamer separation DS decreases in a monotonic way along the length of the spread.

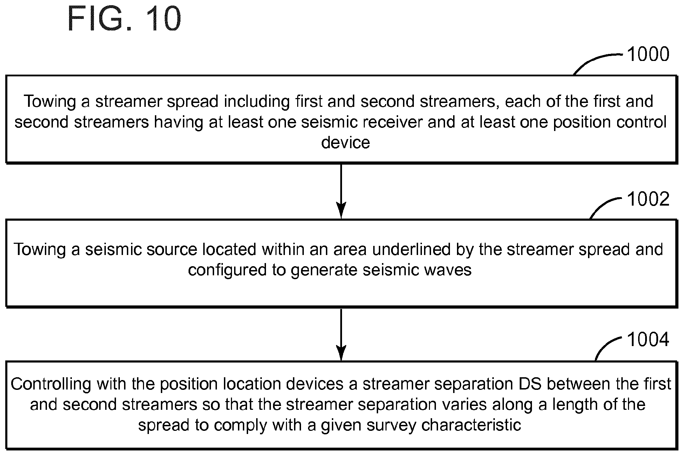

A method for acquiring seismic data with one or more of the configurations discussed above is now discussed with regard to Figure 10. The method includes a step 1000 of towing a streamer spread 402 including first and second streamers 420, each of the first and second streamers 420 having at least one seismic receiver 422 and at least one position control device 424, a step 1002 of towing a seismic source 408 located within an area underlined by the streamer spread 402 and configured to generate seismic waves, and a step 1004 of controlling with the position location devices a streamer separation DS between the first and second streamers so that the streamer separation varies along a length of the spread to comply with a given survey characteristic. The streamer spread 402 is towed by a first vessel 404 and the source 408 is towed by a second vessel 406, and the streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value. The given survey characteristic may be associated with a size of a Fresnel zone. The method may further include a step of varying the streamer separation along the length of the spread to achieve a constant size of the Fresnel zone both for small and large offsets and/or dynamically changing a location of the smallest value of the streamer separation along the length of the spread with the position location devices.

In order to be able to acquire the seismic data with the method discussed above, the position control devices (birds herein) need to be configured accordingly. According to this embodiment, a method for programming the birds includes a step 1100 of calculating plural streamer separations DS between first and second streamers of a spread so that the streamer separation varies along a length of the spread to comply with a given survey characteristic, a step 1102 of calculating forces to be applied by the birds, which are located along the first and second streamers, to maintain the streamer separations DS along the length of the spread, and a step 1104 of programming the birds to maintain the forces during a seismic survey to maintain the streamer separations DS while the first and second streamers move through the water. The method takes into consideration that there is a streamer separation DS(F) at a front-end of the spread, a streamer separation DS(O) at a middle of the spread, and a streamer separation DS(B) at a back-end of the spread, and the streamer separation at the middle of the spread is smaller than the streamer separations at the front-end and the back-end. In one application, the given survey characteristic is associated with a size of a Fresnel zone.

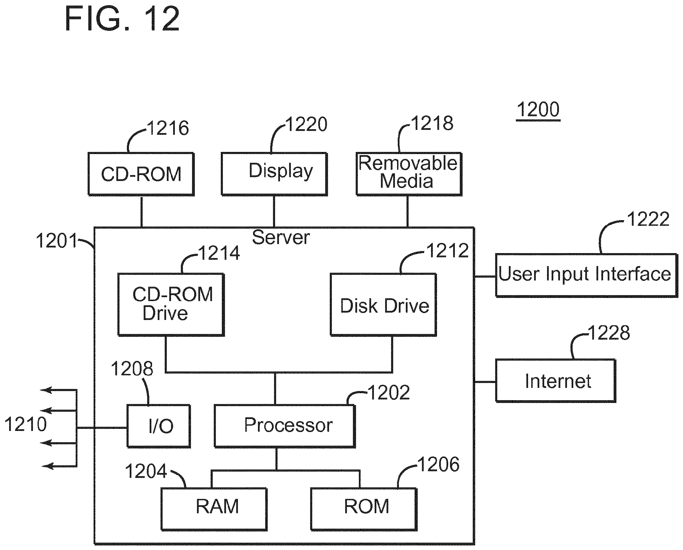

An example of a representative processing device capable of carrying out operations in accordance with the embodiments discussed above is illustrated in Figure 12. This processing device may be part of the birds, the spread vessel, source vessel, or it may be distributed between two or more of these elements. Hardware, firmware, software or a combination thereof may be used to perform the various steps and operations described herein. The processing device 1200 of Figure 12 is an exemplary computing structure that may implement any of the processes and methods discussed above or combinations of them.

The exemplary processing device 1200 suitable for performing the activities described in the exemplary embodiments may include server 1201. Such a server 1201 may include a central processor unit (CPU) 1202 coupled to a random access memory (RAM) 1204 and/or to a read-only memory (ROM) 1206. The ROM 1206 may also be other types of storage media to store programs, such as programmable ROM (PROM), erasable PROM (EPROM), etc. Processor 1202 may communicate with other internal and external components through input/output (I/O) circuitry 1208 and bussing 1210, to provide control signals and the like. For example, processor 1202 may communicate with the source arrays and each streamer and/or receiver. Processor 1202 carries out a variety of functions as are known in the art, as dictated by software and/or firmware instructions.

Server 1201 may also include one or more data storage devices, including disk drives 1212, CD-ROM drives 1214, and other hardware capable of reading and/or storing information, such as a DVD, etc. In one embodiment, software for carrying out the above-discussed steps may be stored and distributed on a CD-ROM 1216, removable media 1218 or other form of media capable of storing information. The storage media may be inserted into, and read by, devices such as the CD-ROM drive 1214, disk drive 1212, etc. Server 1201 may be coupled to a display 1220, which may be any type of known display or presentation screen, such as LCD, plasma displays, cathode ray tubes (CRT), etc. A user input interface 1222 is provided, including one or more user interface mechanisms such as a mouse, keyboard, microphone, touch pad, touch screen, voice-recognition system, etc.

Server 1201 may be coupled to other computing devices, such as the equipment of a vessel, via a network. The server may be part of a larger network configuration as in a global area network (GAN) such as the Internet 1228, which allows ultimate connection to the various landline and/or mobile client/watcher devices.

As also will be appreciated by one skilled in the art, the exemplary embodiments may be embodied in a wireless communication device, a telecommunication network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer-readable medium may be utilized, including hard disks, CD-ROMs, digital versatile discs (DVD), optical storage devices or magnetic storage devices such a floppy disk or magnetic tape. Other non-limiting examples of computer-readable media include flash-type memories or other known types of memories.

The disclosed exemplary embodiments provide streamer spreads that can be configured to achieve a changing cross-line streamer separation, to comply with a survey characteristic, which varies along the spread. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A seismic acquisition system (400) for acquiring seismic data, the system comprising:
a streamer spread (402) including first and second streamers (420), each of the first and second streamers (420) having at least one seismic receiver (422) and at least one position control device (424); and
a seismic source (408) located within an area underlined by the streamer spread (402) and configured to generate seismic waves,
wherein the streamer spread (402) and the source (408) are towed independent of each other,
a streamer separation DS between the first and second streamers varies along a length of the spread to comply with a given survey characteristic, and
the streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value.

2. The system of Claim 1, wherein the given survey characteristic is associated with a size of a Fresnel zone.

3. The system of Claim 2, wherein the streamer separation is varied to achieve a constant size of the Fresnel zone for both small and large offsets.

4. The system of Claim 1, wherein the front-end value is equal to the back-end value.

5. The system of Claim 1, wherein the streamer separation DS changes continuously along the length of the spread.

6. The system of Claim 1, wherein the first and second streamers are curved in a horizontal plane.

7. The system of Claim 1, wherein the source is located at a middle of the length of the spread.

8. The system of Claim 7, wherein a smallest value of the streamer separation is at the middle of the length of the spread.

9. The system of Claim 1, wherein the source is located away from a middle of the length of the spread.

10. The system of Claim 9, wherein a smallest value of the streamer separation is at a location of the source.

11. The system of Claim 1, wherein a smallest value of the streamer separation is dynamically moved along the length of the spread with the position location devices.

12. A method for acquiring seismic data, the method comprising:
towing (1000) a streamer spread (402) including first and second streamers (420), each of the first and second streamers (420) having at least one seismic receiver (422) and at least one position control device (424);
towing (1002) a seismic source (408) located within an area underlined by the streamer spread (402) and configured to generate seismic waves; and
controlling (1004) with the position location devices a streamer separation DS between the first and second streamers so that the streamer separation DS varies along a length of the spread to comply with a given survey characteristic,
wherein the streamer spread (402) is towed by a first vessel (404) and the source (408) is towed by a second vessel (406), and
wherein the streamer separation varies from a front-end value DS(F) at a front-end of the spread, to a middle of the spread value DS(O), to a back-end value DS(B) at a back-end of the spread, and the middle of the spread value is smaller than the front-end value and smaller than the back-end value.

13. The method of Claim 12, wherein the given survey characteristic is associated with a size of a Fresnel zone.

14. A method for acquiring seismic data, the method comprising:
calculating (1100) plural streamer separations DS between first and second streamers of a spread so that the streamer separation DS varies along a length of the spread to comply with a given survey characteristic;
calculating (1102) forces to be applied by birds, which are located on the first and second streamers, to maintain the streamer separations DS along the length of the spread; and
programming (1104) the birds to hold the forces during a seismic survey to maintain the streamer separations DS while the first and second streamers move through the water,
wherein there is a streamer separation DS(F) at a front-end of the spread, a streamer separation DS(O) at a middle of the spread, and a streamer separation DS(B) at a back-end of the spread, and the streamer separation at the middle of the spread is smaller than the streamer separations at the front-end and the back-end.

15. The method of Claim 14, wherein the given survey characteristic is associated with a size of a Fresnel zone.
